# EUROPEAN PATENT SPECIFICATION

(11) **EP 3 883 845 B1**
(45) Date of publication and mention of the grant of the patent: **07.01.2026**
(21) Application number: 19820866.2
(22) Date of filing: 18.11.2019
(51) Int. Cl.: B62J 9/00

(54) **SYSTEM FOR COUPLING AND UNCOUPLING A CONTAINER TO A VEHICLE**
SYSTEM ZUM KUPPELN UND ENTKUPPELN EINES CONTAINERS AN EIN FAHRZEUG
SYSTÈME PERMETTANT DE COUPLER ET DE DÉCOUPLER UN CONTENEUR À UN VÉHICULE

(30) Priority: 20.11.2018 IT 201800010445
(43) Date of publication of application: 29.09.2021
(73) Proprietor: Candelo, Carolina, 16011 Arenzano (GE) (IT); Candelo, Isabella, 16011 Arenzano (GE) (IT)
(72) Inventor: CANDELO, Roberto, 16011 Arenzano (IT)
(74) Representative: Karaghiosoff, Giorgio Alessandro
(86) International application number: PCT/IB2019/059867
(87) International publication number: WO 2020/104910

(56) References cited:
- EP-A1- 2 500 246
- US-A- 4 501 384

## Description

### Field of the Invention

The present invention refers to containers, such as trunks or bags for holding objects, reversibly couplable with vehicles such as, for example, motorcycles.

### Known art

The use of trunks or bags for holding objects that can be reversibly fastened to motorcycles is known. Such trunks can be generally applied to the rear zone of the motorcycle by means of a locking and unlocking mechanism.

The document EP-A-1210260 describes a trunk for motorcycles comprising a locking device with a dual function, i.e. such as to ensure both the closing of the trunk by means of a lid and the locking thereof to a vehicle.

Also Document EP 2 500 246 A1 describes a device for closing and locking a case on a support of a motorcycle that includes a case releasably retaining member mounted on a shell of the case to be longitudinally displaceable to retain or release the case to or from the support and controlled by a a key-operated lock. Another system for coupling/uncoupling a container can be found in document US 4,501,384.

The Applicant observed that the containers of the known art have relatively complex locking mechanisms for the locking to the vehicle and with a not sufficiently compact size.

### Summary of the Invention

A problem addressed by the present invention is that of suggesting a system for coupling/uncoupling a container to a vehicle different than the existing ones and which system is not excessively complex and can be made with a reduced size.

The problem mentioned above is solved by a coupling/uncoupling system as defined by the independent claim 1 and by its preferred embodiments described in the dependent claims 2-4.

According to a further aspect, the present invention concerns a container for holding objects, couplable and uncouplable with/from a vehicle, as defined by claim 5 and by a particular embodiment thereof set forth in claim 6.

### Brief description of the figures

The present invention is thus described in detail below, by way of example and without limitations, with reference to the accompanying drawings, in which:
- figure 1 shows a perspective cut-away view of a container combined with a coupling/uncoupling system made according to an embodiment of the invention, arranged in a coupling position;
- figure 2 shows a section of said container and said coupling/uncoupling system in the coupling position;
- figure 3 shows, in perspective view, a portion of a coupling/uncoupling device included in said system;
- figure 4 shows, in perspective view, said coupling/uncoupling device arranged in an uncoupling position;
- figure 5 shows, in perspective cut-away view of the container and the coupling/uncoupling system, which is arranged in the uncoupling position;
- figure 6 shows a section of said container and said coupling/uncoupling system in the uncoupling position.

### Detailed description

With reference to the accompanying figures, the components of a system for coupling/uncoupling a container 1 to a vehicle (not shown) are shown. The container 1 is, for example, a trunk or a bag for holding objects, reversibly couplable with a vehicle such as, in particular, a motorcycle. For example, the container 1 is couplable with the tank of a motorcycle or with a rear zone thereof. (To be checked) The container comprises a bottom wall 100 and a side wall 101 which define a compartment for housing objects.

The coupling/uncoupling system comprises a coupling/uncoupling device 2 mountable on the container 1, and a bracket 3 for supporting the container 1, that can be fastened to the vehicle itself. The bracket 3 is intended to interact with the coupling/uncoupling device 2 and is, for example, integral with a bearing base 4, that can be combined with an appropriate portion of the vehicle.

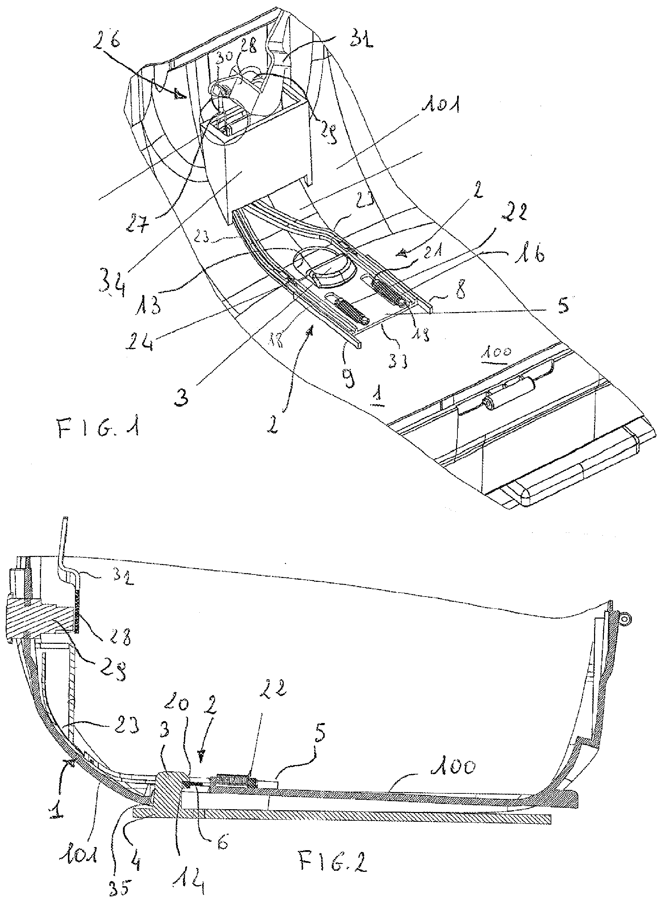

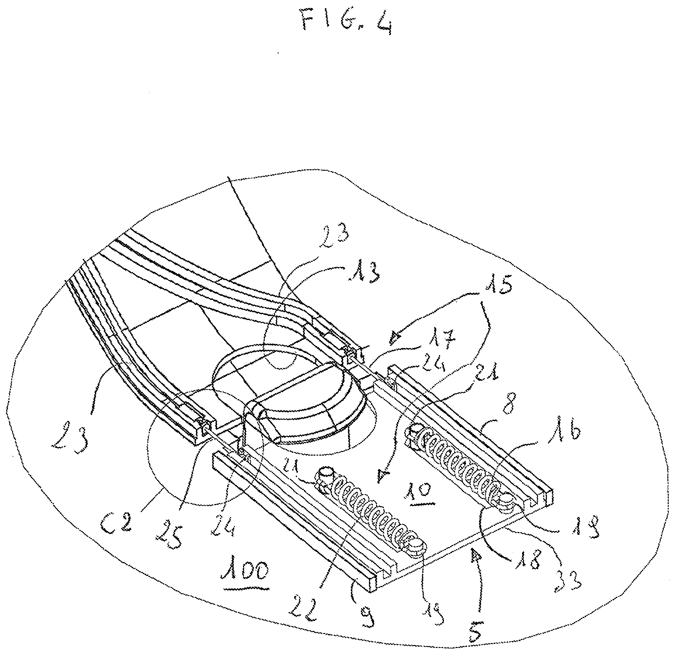

The coupling/uncoupling device 2 is provided with a supporting slide 5 of an engagement element 6 and is configured to translate between a coupling limit position (shown in figures 1-3), wherein the element 6 is engaged in the bracket 3, and an uncoupling limit position (shown in figures 4-6), wherein the element 6 is disengaged from the bracket 3.

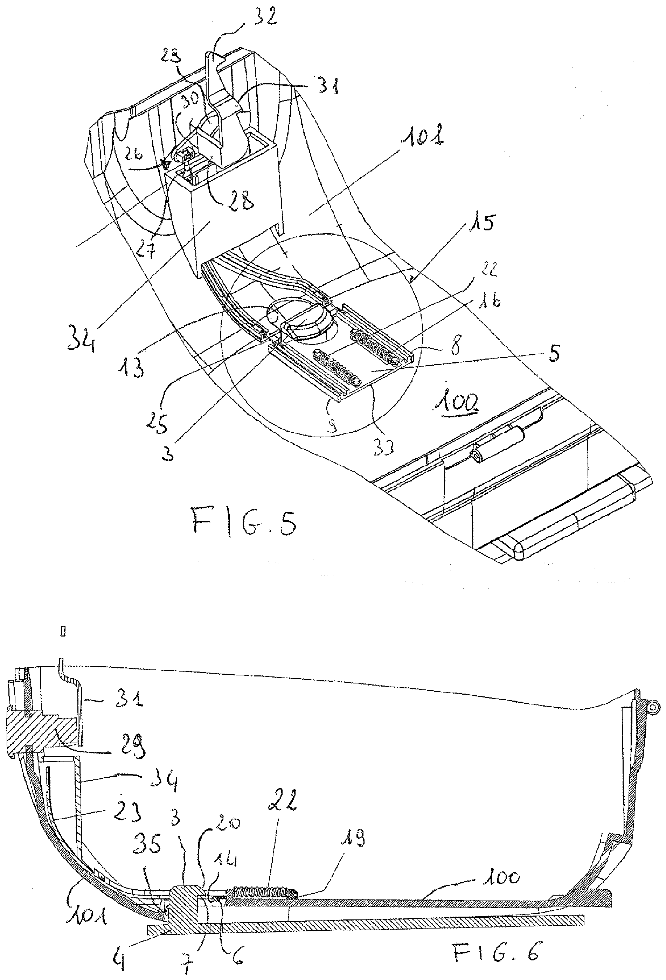

According to the example of the figures, the bracket 3 is shaped such as to form a locking zone 7 visible in figures 2 and 6. The bracket 3 is such as to be inserted in an opening 13 obtained on the bottom wall 100 of the container 1. Moreover, the bracket 3 has an upper portion 20 such as to define an inclined plane. The possibility that the bracket 3 is a structural component of the vehicle and not an additional component is not excluded.

In particular, the slide 5 comprises a plate 10, for example rectangular, sliding along guiding means. In particular, such guiding means allow the slide 5 to slide rectilinearly in two opposite ways. Preferably, the guiding means comprise at least one first fixed side guide 8 and one second fixed side guide 9.

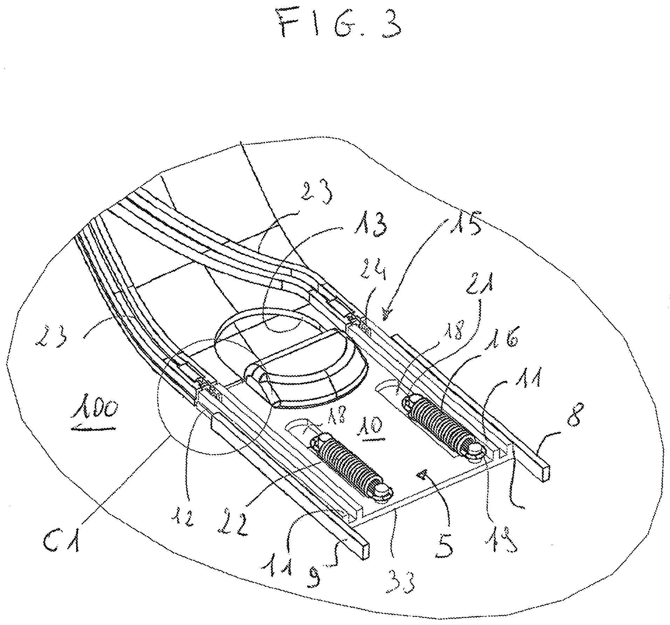

According to a particular embodiment, the plate 10 has side edges 11, each having a respective groove 12 (figure 3) intended to accommodate a rib (not shown) extending from the first and second fixed side guides 8 and 9.

The engagement element 6 (figures 3 and 6), integral with the slide 5, is shaped such as to allow it to geometrically couple with the locking zone 7 of the bracket 3. For example, the engagement element 6 is a folded edge of the plate 10 such as to form, preferably, an inclined plane 14 which facilitates the positioning of the container 1 and its coupling with the bracket 3.

Moreover, the coupling/uncoupling system comprises a movement mechanism 15 structured to cause the translation of the slide 5 between the coupling and uncoupling limit positions.

The movement mechanism 15 preferably comprises elastic means acting on the slide 5 to bring it to one of the coupling or uncoupling positions, and motion transmitting means allowing to cause the sliding of the slide 5 towards the other position.

In particular, the elastic means comprise at least one first return spring 16 (figures 3 and 4) mechanically connected to the slide 5 and such as to act to keep the slide 5, for example, in the coupling position. The motion transmitting means comprise, according to an example, at least one first mechanical transmitting component 17 for transmitting a force to the slide 5 so that to make it slide towards the uncoupling position (by stretching the first return spring 16).

According to a particular embodiment shown in the figures, the first return spring 16 is of the helical type and is arranged at a slot 18 obtained in the plate 10 of the slide 5. The first return spring 16 is provided with a first end 19 fastened to the plate 5 (by means of a respective pin) and with a second end 21 fastened to the bottom wall 100 of the container 1 (by means of another pin).

For example, in the coupling position (figures 1, 2 and 3), the element 6 is engaged with the bracket 3 and the first spring 16 is resting, whereas when going towards the uncoupling position (figures 4, 5 and 6), the element 6 is disengaged from the bracket 3 and the first spring 16 is tensioned.

Preferably, the movement mechanism 15 further comprises a second return spring 22 similar to the first spring 16 and arranged at a further slot still denoted by the number 18. The first spring 16 and the second spring 22 are oriented in the sliding direction of the slide 5. The first end 19 of the first return spring 16 and that of the second return spring 22 are arranged, for example, next to a rear edge 33 of the plate 5 opposite the one on which the engagement element 6 is obtained.

The first transmitting component 17 can be made through a first metal wire of the sheathed type or the like able to transmit a force to the slide 5 for its movement. In particular, the first metal wire 17 is kept in a position appropriate for transmitting the force thanks to a guiding structure 23. The first metal wire 17 is provided with a relative end 24 (figures 3 and 4) fastened to the edge of the plate 10 on which, according to the example, the engagement element 6 is present.

The movement mechanism 15 further comprises a second transmitting component 25 which can be a second metal wire made similarly to the first metal wire 17.

The coupling/uncoupling system comprises a drive member 26 of the movement mechanism 15, operable by a user. The first metal wire 17 and the second metal wire 25 are also fastened to the drive member 26. In particular, the first and the second metal wires 17 and 25 can form a single wire having the ends 24 fastened to the slide 5 and a shared median portion 27 fastened to the drive member 26.

According to an embodiment considered, the drive member 26 comprises a first rotatable arm 28 provided with fastening means 30 to lock the median portion 27 of the metal wires 17 and 25. The first arm 28 is integral with a drive element 29, such as for example, a cylinder of a key lock. The key (not shown) can be inserted in an opening of the cylinder 29, accessible from the outside of the container 1. The cylinder 29 is fastened, for example, to the side wall 101 of the container 1. The cylinder 29 is rotatable (around its axis) by means of the key such as to also cause the rotation of the first arm 28 and thus to act on the metal wires 17 and 25. The first arm 28 extends in a radial direction with respect to the rotation axis of the cylinder 29.

More in detail, the cylinder 29 can take at least two operative positions. In a first operative position corresponding to the coupling position (figures 1-3), the first arm 28 acts on the first and second metal wires 17 and 25 such as to promote or not counter the action of the first return spring 16 and of the second return spring 22, thus allowing the slide 5 to come closer the bracket 3.

In a second operative position corresponding to the uncoupling position (figures 4-6), the first arm 28 acts on the first and second metal wires 17 and 25 by pushing (countering the first and second springs 16 and 22) the slide 5, such as to move it away from the bracket 3.

Advantageously, the drive member 26 can also carry out the function of opening and closing a lid (not shown) of the container 1. In such case, for example, a second rotatable arm 31 (figures 1 and 5) is provided integral with the cylinder 29 and having a hook 32 (figure 5) at a respective end, such as to couple and uncouple with/from an appropriate counter-hook (not shown) provided in the lid of the container 1, depending on the angular position taken by the cylinder 29. The second arm 31 extends in a radial direction with respect to the rotation axis of the cylinder 29.

The coupling and uncoupling positions of the container 1 at the bracket 3 can coincide with the opening and closing conditions of the lid. For example, as shown in figure 1 (figure 5), the coupling (uncoupling) position of the container 1 in the bracket 3 coincides with the closing (opening) of the lid.

Alternatively, the small cylinder 29 can be structured such as to also assume configurations that cause the opening or closing of the lid (by acting on the second arm 31), but which do not cause the coupling or uncoupling of the container 1 in the bracket 3. For example, a rotation of the cylinder 29 and of the second arm 31 from the closing position of the lid towards an opening position thereof, which doesn't cause a moving away of the slide 5 from the bracket 3, can be provided; a moving away which instead occurs at a further rotation imparted to the cylinder 29.

It should be noted that the guiding structures 23 of the first wire 17 and of the second wire 25 develop from the bottom wall 100 of the container 1 towards the side wall 101 and are advantageously protected by a covering partition 34.

Moreover, the slide 5, the first return spring 16, the second return spring 22 and the opening 13 can be separated from the compartment of the container 1 in which the objects are arranged by means of a further bottom wall (not shown).

During the step of coupling the container 1 to the bracket 3, the user ensures that the bracket 3 is inserted in the opening 13. The engagement element 6 interacts with the upper portion of the bracket 3 such as to translate (also thanks to the shapes of the inclined plane type) together with the slide 5, and to move away from the bracket 3 to then be inserted in the locking zone 7 defined by the bracket 3. The moving away of the slide 5 from the bracket 3 is carried out, according to the example considered, by countering the first spring 16 and the second spring 22 (which are stretched), whereas the opposite sliding is favored by the return of such springs.

As simply shown in figure 3, in the circlet C1, when the coupling position is reached, the slide 5 is in abutment with the facing ends of the guiding structures 23 of the first wire 17 and of the second wire 25.

It should be noted that an abutment zone 35 of the bottom wall 100 of the container 1 goes in abutment on a small side wall of the bracket 3, which is opposite the one defining the locking zone 7 such as to keep the container 1 in position when coupled.

The coupling operation can thus be carried out without acting by means of the key on the cylinder 29.

As far as the uncoupling step is concerned, the user will act on the cylinder 29 with the appropriate key, by rotating the first arm 28 from the coupling position shown in figure 1 to the uncoupling one shown in figure 5.

During such uncoupling rotation, the first arm 28 will exert a thrust force onto the first wire 17 and the second wire 25, which will in turn push the slide 5 (countering the return force of the first and second springs 16 and 22), which, together with the engagement element 6, will move away from the bracket 3, thus allowing the removal of the container 1 from the vehicle.

As simply shown in figure 4, in the circlet C2, when the uncoupling position is reached, the slide 5 is spaced apart with respect to the facing ends of the guiding structures 23 of the first wire 17 and of the second wire 25.

Once the container 1 has been removed, the slide 5 moves next to the opening 13, under the action of the first spring 16 and of the second spring 22 which reach a stable configuration.

The coupling/uncoupling system described and the container 1, which comprises the coupling/uncoupling device 2, are particularly advantageous since they allow the user to carry out the coupling and uncoupling of the container 1 from the vehicle in a simple and quick way.

Moreover, the coupling/uncoupling system described is not excessively complex and has a reduced size, while preserving the space for the objects to place inside the container.

It should further be noted that the coupling/uncoupling system described above preferably allows to integrate the coupling/uncoupling function of the container to the vehicle in a single control lock with the opening and closing function of the lid of the container itself.

## Claims

1. System for coupling/uncoupling a container (1) with/from a vehicle, comprising:
a coupling/uncoupling device (2) mountable on said container (1) and configured for coupling/uncoupling the container (1) with/from a vehicle;
a fastening bracket (3) of the container (1) mountable on the vehicle and intended to cooperate with the coupling/uncoupling device (15);
wherein the coupling/uncoupling device (2) comprises:
a supporting slide (5) of an engagement element (6), configured to translate between a coupling limit position, wherein the element (6) is engaged in the bracket (3), and an uncoupling limit position, wherein the element (6) is disengaged from the bracket (3);
a movement mechanism (15) structured to cause the translation of the slide between the coupling and uncoupling limit positions;
a drive member (26) of the movement mechanism (15), operable by a user, wherein the movement mechanism (15) comprises:
elastic means (16, 22) acting on the slide (5) to bring it in one of said limit positions;
motion transmitting means (17, 25) allowing to cause the sliding of the slide (5) towards the other limit position
wherein the slide (5) is configured to slide rectilinearly in two opposite ways;
the elastic means comprise at least one return spring (16) having a first end (19) fastened to the slide (5) and a second end (21) that can be fastened to a bottom wall (100) of the container (1);
the motion transmitting means comprise at least one metal wire (17) having a relative first end fastened to the slide (5) and a relative second end (27) fastened to the drive member (26);
**characterized in that** said drive member (26) comprises:
a lock cylinder (29) rotatable by the user, by means of a key, at least between a first configuration and a second configuration corresponding to the uncoupling limit position;
- a rotatable arm (28) supported by said cylinder (29) and mechanically connected with the movement mechanism (15);
- a further rotatable arm (31) supported by said lock cylinder (29) and configured to assume a closing configuration of the container (1) wherein the further rotatable arm is engaged with a portion of a cover of the container (1) and an opening configuration of the container wherein the further rotatable arm is disengaged from said portion of the cover.

2. System according to claim 1, wherein:
- said at least one return spring (16) is so that to bring the slide (5) in the coupling limit position starting from the uncoupling limit position;
- said at least one metal wire (17) is configured to push the slide (5) from the coupling limit configuration to the uncoupling limit configuration, under the action of the drive member (26).

3. System according to one or more of the preceding claims wherein: the second end (27) of the at least one metal wire (17) is fastened to a portion of the rotatable arm (28).

4. System according to at least claim 1, wherein:
the slide (5) is plate-shaped and slides along at least one guide (8, 9) that can be fastened to the bottom wall (100) of the container (1);
the drive member (26) is mountable to a side wall (101) of the container (1);
said at least one metal wire (17) is housed in a stabilizing structure (23).

5. Container (1) for holding objects, couplable and uncouplable with/from a vehicle, comprising:
a bottom wall (100) and a side wall (101) radiused to the bottom wall (100) so that to define a compartment for housing objects;
a coupling/uncoupling device (2) mounted on said container (1) and configured for coupling/uncoupling the container (1) with/from a fastening bracket (3) mountable on a vehicle;
wherein the coupling/uncoupling device (2) comprises:
a supporting slide (5) of an engagement element (6), configured to translate between a coupling limit position, wherein the element (6) is engaged in the bracket (3), and an uncoupling limit position, wherein the element (6) is disengaged from the bracket (3);
a movement mechanism (15) structured to cause the translation of the slide between the coupling and uncoupling limit positions;
a drive member (26) of the movement mechanism (15), operable by a user, wherein the movement mechanism (15) comprises:
elastic means (16, 22) acting on the slide (5) to bring it in one of said limit positions;
motion transmitting means (17, 25) allowing to cause the sliding of the slide (5) towards the other limit position
and wherein:
- the slide (5) is configured to slide rectilinearly in two opposite ways;
- the elastic means comprise at least one return spring (16) having a first end (19) fastened to the slide (5) and a second end (21) that can be fastened to a bottom wall (100) of the container (1);
- the motion transmitting means comprise at least one metal wire (17) having a relative first end fastened to the slide (5) and a relative second end (27) fastened to the drive member (26) **characterized in that** said drive member comprises a lock cylinder rotatable by the user, by means of a key, at least between a first configuration and a second configuration corresponding to the uncoupling limit position;- a rotatable arm supported by said cylinder and mechanically connected with the movement mechanism;- a further rotatable arm supported by said lock cylinder and configured to assume a closing configuration of the container wherein the further rotatable arm is engaged with a portion of a cover of the container and an opening configuration of the container wherein the further rotatable arm is disengaged from said portion of the cover.

6. Container for holding objects according to claim 5, wherein said container is a trunk couplable with a motorcycle.

## Patentansprüche

1. System zum Kuppeln/Entkuppeln eines Behälters (1) mit/von einem Fahrzeug, umfassend:
eine Kuppel-/Entkupplvorrichtung (2), die an dem Behälter (1) montierbar und zum Kuppeln/Entkuppeln des Behälters (1) mit/von einem Fahrzeug konfiguriert ist;
einen an dem Fahrzeug montierbaren Befestigungsbügel (3) des Behälters (1), der zum Zusammenwirken mit der Kupplungs-/Entkupplungsvorrichtung (15) vorgesehen ist;
wobei die Kupplungs-/Entkupplungsvorrichtung (2) umfasst:
einen Tragschlitten (5) eines Eingriffselements (6), der zum Verfahren zwischen einer Kupplungsgrenzstellung, in der das Element (6) in den Bügel (3) eingreift, und einer Entkupplungsgrenzstellung, in der das Element (6) mit dem Bügel (3) entkuppelt ist, konfiguriert ist;
einen Bewegungsmechanismus (15), der so strukturiert ist, dass er das Verfahren des Schlittens zwischen der Kupplungs- und der Entkupplungsgrenzstellung bewirkt;
ein Betätigungsorgan (26) des Bewegungsmechanismus (15), das von einem Benutzer betätigt werden kann, wobei der Bewegungsmechanismus (15) umfasst:
elastische Mittel (16, 22), die auf den Schlitten (5) einwirken, um diesen in eine der Grenzstellungen zu bringen;
Bewegungsübertragungsmittel (17, 25), die das Gleiten des Schlittens (5) in Richtung der anderen Grenzstellung bewirken können
wobei
der Schlitten (5) zum geradlinigen Gleiten in zwei entgegengesetzte Richtungen konfiguriert ist;
die elastischen Mittel mindestens eine Rückstellfeder (16) umfassen, mit einem ersten Ende (19), das am Schlitten (5) befestigt ist, und einem zweiten Ende (21), das an einer Bodenwand (100) des Behälters (1) befestigt werden kann;
die Bewegungsübertragungsmittel umfassen mindestens einen Metalldraht (17) mit einem an dem Schlitten (5) befestigten relativen ersten Ende und einem an dem Betätigungselement (26) befestigten zweiten Ende (27);
**dadurch gekennzeichnet, dass** das Betätigungselement (26) umfasst:
einen Schlosszylinder (29), der vom Benutzer mittels eines Schlüssels zumindest zwischen einer ersten Konfiguration und einer der Entkupplungsgrenzstellung entsprechenden zweiten Konfiguration drehbar ist;
einen drehbaren Arm (28), der von dem Zylinder (29) getragen wird und mechanisch mit dem Bewegungsmechanismus (15) verbunden ist;
- einen weiteren drehbaren Arm (31), der von dem Schlosszylinder (29) getragen wird und so konfiguriert ist, zum Einnehmen einer Schließkonfiguration des Behälters (1), bei der der weitere drehbare Arm mit einem Abschnitt eines Deckels des Behälters (1) in Eingriff steht, und einer Öffnungskonfiguration des Behälters, bei der der weitere drehbare Arm von diesem Abschnitt des Deckels entkoppelt ist.

2. System nach Anspruch 1, wobei:
- die mindestens eine Rückstellfeder (16) so ausgebildet ist, dass sie den Schlitten (5) ausgehend von der Entkupplungsgrenzstellung in die Kupplungsgrenzstellung bringt;
- der mindestens eine Metalldraht (17) so ausgebildet ist, dass er den Schlitten (5) unter der Wirkung des Betätigungselementes (26) aus der Kupplungsgrenzstellung in die Entkupplungsgrenzstellung drückt.

3. System gemäß einem oder mehreren der vorstehenden Ansprüche, wobei: das zweite Ende (27) des mindestens einen Metalldrahtes (17) an einem Abschnitt des drehbaren Arms (28) befestigt ist.

4. System gemäß mindestens Anspruch 1, wobei:
der Schlitten (5) plattenförmig ist und entlang mindestens einer Führung (8, 9) gleitet, die an der Bodenwand (100) des Behälters (1) befestigt werden kann;
das Betätigungselement (26) an einer Seitenwand (101) des Behälters (1) montierbar ist;
der mindestens eine Metalldraht (17) in einer Stabilisierungsstruktur (23) aufgenommen ist.

5. Behälter (1) zum Tragen von Gegenständen, der mit/von einem Fahrzeug gekoppelt und entkoppelt werden kann, umfassend:
eine Bodenwand (100) und eine an der Bodenwand (100) anschliessende Seitenwand (101), um einen Raum zur Aufnahme von Gegenständen zu definieren;
eine Kupplungs-/Entkupplungsvorrichtung (2), die an dem Behälter (1) montiert und zum Kuppeln/Entkuppeln des Behälters (1) mit/von einem an einem Fahrzeug montierbaren Befestigungsbügel (3) konfiguriert ist;
wobei die Kupplungs-/Entkupplungsvorrichtung (2) umfasst:
einen Tragschlitten (5) eines Eingriffselements (6), der zum Verfahren zwischen einer Kupplungsgrenzstellung, in der das Element (6) in den Bügel (3) eingreift, und einer Entkupplungsgrenzstellung, in der das Element (6) mit dem Bügel (3) entkuppelt ist, konfiguriert ist;
einen Bewegungsmechanismus (15), der so strukturiert ist, dass er das Verfahren des Schlittens zwischen der Kupplungs- und der Entkupplungsgrenzstellung bewirkt;
ein Betätigungsorgan (26) des Bewegungsmechanismus (15), das von einem Benutzer betätigt werden kann, wobei der Bewegungsmechanismus (15) umfasst:
elastische Mittel (16, 22), die auf den Schlitten (5) einwirken, um diesen in eine der Grenzstellungen zu bringen;
Bewegungsübertragungsmittel (17, 25), die das Gleiten des Schlittens (5) in Richtung der anderen Grenzstellung bewirken können
und wobei:
- der Schieber (5) zum geradlinigen Gleiten in zwei entgegengesetzte Richtungen konfiguriert ist;
- die elastischen Mittel mindestens eine Rückstellfeder (16) umfassen, mit einem am Schlitten (5) befestigten ersten Ende (19) und einem an einer Bodenwand (100) des Behälters (1) befestigbaren zweiten Ende (21);
- die Bewegungsübertragungsmittel mindestens einen Metalldraht (17) mit einem relativen ersten, am Schlitten (5) befestigten Ende und einem relativen zweiten, am Betätigungselement (26) befestigten Ende (27) umfassen, **dadurch gekennzeichnet, dass**
das Betätigungselement einen Schlosszylinder umfasst, der vom Benutzer mittels eines Schlüssels
zumindest zwischen einer ersten Konfiguration und einer der Entkupplungsgrenzstellung entsprechenden zweiten Konfiguration drehbar ist;
- einen drehbaren Arm, der von dem Zylinder getragen wird und mechanisch mit dem Bewegungsmechanismus verbunden ist;
- einen weiteren drehbaren Arm, der von dem Schlosszylinder getragen wird und zum Einnehmen einer Schließkonfiguration des Behälters, in der der weitere drehbare Arm mit einem Abschnitt eines Deckels des Behälters in Eingriff steht, und einer Öffnungskonfiguration des Behälters, in der der weitere drehbare Arm von dem Abschnitt des Deckels außer Eingriff ist, konfiguriert ist.

6. Behälter zum Aufnehmen von Gegenständen gemäß Anspruch 5, wobei der Behälter ein an ein Motorrad kuppelbarer Koffer ist.

## Revendications

1. Système de couplage/de découplage d'un conteneur (1) à un/d'un véhicule, comprenant:
un dispositif de couplage/de découplage (2) pouvant être installé sur ledit conteneur (1) et configuré pour coupler/découpler le conteneur (1) à un/d'un véhicule;
un support de fixation (3) du conteneur (1) installé sur le véhicule et destiné à coopérer avec le dispositif de couplage/de découplage (15);
dans lequel le dispositif de couplage/de découplage (2) comprend:
une coulisse de support (5) d'un élément d'engagement (6) configurée pour se déplacer entre une position limite de couplage, dans laquelle l'élément (6) est engagé dans le crochet (3), et une position limite de découplage, dans laquelle l'élément (6) est désengagé du crochet (3);
un mécanisme de mouvement (15) structuré pour provoquer le déplacement de la coulisse entre les positions limites de couplage et de découplage;
un élément d'entraînement (26) du mécanisme de mouvement (15), actionnable par un utilisateur, dans lequel le mécanisme de mouvement (15) comprend:
des moyens élastiques (16, 22) agissant sur la coulisse (5) pour l'amener dans une desdites positions limites;
des moyens de transmission de mouvement (17, 25) permettant de provoquer le coulissement de la coulisse (5) vers l'autre position limite
dans lequel
la coulisse (5) est configurée pour coulisser de manière rectiligne dans deux directions opposées;
les moyens élastiques comprennent au moins un ressort de rappel (16) ayant une première extrémité (19) fixée à la coulisse (5) et une seconde extrémité (21) pouvant être fixée à une paroi de fond (100) du conteneur (1);
les moyens de transmission de mouvement comprennent au moins un fil métallique (17) ayant une première extrémité respective fixée à la coulisse (5) et une seconde extrémité (27) respective fixée à l'élément d'entraînement (26);
**caractérisé en ce que**
ledit élément d'entraînement (26) comprend:
un cylindre de verrouillage (29) pouvant être tourné par l'utilisateur, au moyen d'une clé, au moins entre une première configuration et une seconde configuration correspondant à la position limite de découplage;
- un bras rotatif (28) supporté par ledit cylindre (29) et connecté mécaniquement avec le mécanisme de mouvement (15);
- un bras rotatif (31) ultérieur supporté par ledit cylindre de verrouillage (29) et configuré pour adopter une configuration de fermeture du conteneur (1), dans laquelle le bras rotatif ultérieur est engagé avec une portion d'un couvercle du conteneur (1) et une configuration d'ouverture du conteneur, dans laquelle le bras rotatif ultérieur est désengagé de ladite portion du couvercle.

2. Système selon la revendication 1, dans lequel:
- ledit au moins un ressort de rappel (16) est tel qu'il amène la coulisse (5) dans la position limite de couplage à partir de la position limite de découplage;
- ledit au moins un fil métallique (17) est configuré pour pousser la coulisse (5) de la configuration limite de couplage à la configuration limite de découplage, sous l'action de l'élément d'entraînement (26).

3. Système selon l'une ou plusieurs des revendications précédentes, dans lequel: la seconde extrémité (27) de l'au moins un fil métallique (17) est fixée à une portion du bras rotatif (28).

4. Système selon la revendication 1, dans lequel:
la coulisse (5) est en forme de plaque et coulisse le long d'au moins un guide (8, 9) pouvant être fixé à la paroi de fond (100) du conteneur (1);
l'élément d'entraînement (2, 6) peut être installé sur une paroi latérale (101) du conteneur (1);
ledit au moins un fil métallique (17) est logé dans une structure de stabilisation (23).

5. Conteneur (1) pour contenir des objets, pouvant être couplé et découplé à/d'un véhicule, comprenant:
une paroi de fond (100) et une paroi latérale (101) reliée à la paroi de fond (100) de manière à définir un compartiment pour loger des objets;
un dispositif de couplage/de découplage (2) installé sur ledit conteneur (1) et configuré pour coupler/découpler le conteneur (1) à/d'un support de fixation (3) pouvant être installé sur un véhicule;
dans lequel
le dispositif de couplage/de découplage (2) comprend:
une coulisse de support (5) d'un élément d'engagement (6) configurée pour se déplacer entre une position limite de couplage, dans laquelle l'élément (6) est engagé dans le crochet (3), et une position limite de découplage, dans laquelle l'élément (6) est désengagé du crochet (3);
un mécanisme de mouvement (15) structuré pour provoquer le déplacement de la coulisse entre les positions limites de couplage et de découplage;
un élément d'entraînement (26) du mécanisme de mouvement (15), actionnable par un utilisateur, dans lequel le mécanisme de mouvement (15) comprend:
des moyens élastiques (16, 22) agissant sur la coulisse (5) pour l'amener dans une desdites positions limites;
des moyens de transmission de mouvement (17, 25) permettant de provoquer le coulissement de la coulisse (5) vers l'autre position limite
et dans lequel:
- la coulisse (5) est configurée pour coulisser de manière rectiligne dans deux directions opposées;
- les moyens élastiques comprennent au moins un ressort de rappel (16) ayant une première extrémité (19) fixée à la coulisse (5) et une seconde extrémité (21) pouvant être fixée à une paroi de fond (100) du conteneur (1);
- les moyens de transmission de mouvement comprennent au moins un fil métallique (17) ayant une première extrémité respective fixée à la coulisse (5) et une seconde extrémité (27) respective fixée à l'élément d'entraînement (26), **caractérisé en ce que** ledit élément d'entraînement comprend un cylindre de verrouillage pouvant être tourné par l'utilisateur, au moyen d'une clé, au moins entre une première configuration et une second configuration correspondant à la position limite de découplage; - un bras rotatif supporté par ledit cylindre et connecté mécaniquement avec le mécanisme de mouvement; - un bras rotatif ultérieur supporté par ledit cylindre de verrouillage et configuré pour adopter une configuration de fermeture du conteneur et une configuration d'ouverture du conteneur, dans laquelle le bras rotatif ultérieur est désengagé de ladite portion du couvercle .

6. Conteneur pour contenir des objets selon la revendication 5, dans lequel ledit conteneur est un coffre pouvant être fixé à une moto.
